# EUROPEAN PATENT SPECIFICATION

(11) **EP 1 772 219 B1**
(45) Date of publication and mention of the grant of the patent: **02.03.2011**
(21) Application number: 06019252.3
(22) Date of filing: 14.09.2006
(51) Int. Cl.: B23B 31/12

(54) **A shock-resistant drill chuck of hand tightening type**
Von Hand spannbares und schockbeständiges Bohrfutter
Mandrin de perceuse se serrant à la main et résistant aux chocs

(30) Priority: 10.10.2005 CN 200520127386 U
(43) Date of publication of application: 11.04.2007
(73) Proprietor: Shanxi Huifeng Machine Industrial Co., Ltd., Changzhi City Shangxi Province 046012 (CN)
(72) Inventor: Tian, Xianming, Changzhi City, Shanxi Province, 046012 (CN); Xu, Qiaoyu, Changzhi City Shanxi Province, 046012 (CN); Zhang, Xiaoyong, Changzhi City Shanxi Province, 046012 (CN)
(74) Representative: Thum, Bernhard

(56) References cited:
- EP-A- 1 537 931
- WO-A-2008/009170
- WO-A-2008/046248
- CN-Y- 2 680 390
- CN-Y- 2 726 771
- CN-Y- 201 058 380
- DE-A1- 10 137 281
- FR-A- 2 897 004
- GB-A- 2 426 728
- US-A- 5 145 194

## Description

### Technical Field

The present invention relates to a shock-resistant drill chuck of hand tightening type according to the preamble of claim 1 used in the power drill, in which a tool handle may be manually clamped and released from the drill chunk without using of wrench, and which has an excellent shock-resistant performance.

### Background of the Invention

As well known, the drill chunk in the power churn drill is used for clamping the tool bits of various diameters so as to perform various works. Such drill chunk can be adjusted within a certain range to adapt to the tool-handle with different diameters. Up to now, many kinds of drill chunk have been developed. Such kind of drill chunk typically comprises a rear cap, a body, a thrust ring, a bearing assembly, a threaded ring, clamping jaws, a front cap, and an end cap. The thrust ring abuts against a shoulder formed on the middle of the body and fixedly connects to the body. Three clamping jaws are arranged in three angling holes respectively located in the body and spaced uniformly from each other by 120°. A threaded ring with two halves is rotatably mounted in a groove formed in the middle of the body. The threaded ring cooperates with the screw on the clamping jaws so as to form a screw driving mechanism. The bearing assembly including balls is rotatably held between the ball race surface of the thrust ring and the ball-race surface of the threaded ring. The front cap is tightly fitted around the outer surface of the two halves of the threaded ring, so that the two halves form an integral threaded ring. The rear cap is tightly fitted on the rear portion of the body, and the end cap is tightly fitted on the front end of the body. When assembling, drill chunk and the driving shaft of the power driller are connected by screw or a tapered hole. In use, one rotates the front cap with his or her hand, then the threaded ring is driven to rotate, so that the three clamping jaws move backward or forward in the angling holes by means of the screw transmission between the threaded ring and the clamping jaws for releasing or clamping the tool handle.

Such drill chunk has following disadvantage: the clamping is accomplished only by the screw connection between the threaded ring and the clamping jaws, and since the power churn drill will perform not only a rotation but also a reciprocating shock motion, the screw connection between the threaded ring and the clamping jaws tend to be loosed and this causes a relative movement between the threaded ring and the clamping jaws, as a result, the clamping jaws release the tool handle held by them and the work have to be interrupted.

For overcoming the above defects, the present applicant proposed in the Chinese patent No. ZL 200420003388.2 a hand tightening self-lock drill chunk which comprises a rear cap, a body, a bearing bowl, three arc-shaped bearing assemblies, a threaded ring, clamping jaws, a front cap, and an end cap, wherein the bearing bowl abuts against a shoulder formed on the middle of the body and fixedly connects to the body. Three clamping jaws are arranged in three angling holes located in the body and spaced uniformly from each other by 120°. A threaded ring with two halves is rotatably mounted in a groove formed in the middle of the body. The threaded ring has sloping ball-race surface and cooperates with the screw on the clamping jaws so as to form a screw transmission mechanism. The three arc-shaped bearing assemblies are rotatably clamped between the inner ball-race surface of the bearing bowl and the sloping ball-race surface of the threaded ring. The front cap is tightly fitted around the outer surface of the two halves of the threaded ring, so that the two halves form an integral threaded ring. The rear cap is tightly fitted on the rear portion of the body, and the end cap is tightly fitted on the front end of the body. When assembling, the drill chunk is connected to the drive shaft of the churn drill by a screw or a tapered bore. In use, one rotates the front cap with his or her hand, then the threaded ring is driven to rotate, so that the three clamping jaws move backward or forward in the angling holes. During the process for fastening or clamping the tool handle, the balls in the three arc-shaped bearing assemblies each moves radially along the sloping ball-race surface of the threaded ring, so that the outer circumferential wall of the ball holder of the arc-shaped bearing assemblies abuts against the inner wall of the bearing bowl, so that a frictional force for suppress the threaded ring from rotating reversely is produced. With this structure, a frictional force is produced between the ball holder and the bearing bowl to restrains the tool from being released due to shock to certain extent. However, as the curvature radius of the ball holder of the bearing assemblies is different from that of the bearing bowl, the ball holder contacts with the bearing bowl in a manner of point-contact, rather than a surface contact, thus the frictional force generated is limited and the resistance to shock is poor. For improving the contact area between the ball holder and the bearing bowl, the present applicant further proposed that the ball holder is made of a deformable plastic material. In this way, when the three arc-shaped bearing assemblies come to contact with the inner wall of the bearing bowl, the interaction force will force the plastic ball holder to deform, and then the point contact therebetween will become surface contact. Therefore the frictional force for restraining the threaded ring from rotating reversely is increased. However, in this arrangement, the plastic pieces will deform due to the increase of the work temperature, and this make it is impossible to increase the frictional force further, and this arrangement can not provide a excellent shock-resistance.

Moreover, another Chinese patent No. 2004200067851.X of the present inventor disclosed a drill chunk which comprises a rear cap, a body, a ball supporting ring, balls, a threaded ring, clamping jaws, a front cap, and an end cap. The ball supporting ring abuts against a shoulder formed on the middle of the body, and fixedly connects to the body. Three clamping jaws are arranged in three angling holes which located on the body and spaced uniformly from each other by 120°. The threaded ring with two halves is rotatably disposed in a groove located at the middle of the body, and cooperates with the screw on the clamping jaws so as to form a screw transmission mechanism. The balls are placed in several cylindrical through-holes which are uniformly arranged at the end face of the ball supporting ring about a central axis, and said balls are held between the body and the ball-race surface of the threaded ring. The front cap is tightly fitted around the outer surface of the two halves of the threaded ring so that the two halves form an integral threaded ring, and the rear cap is tightly fitted on a rear end of the body, while the end cap is tightly fitted on a front end of the body. When assembling, the drill chunk is connected to the drive shaft of the churn drill by a screw or a tapered bore. In use, one rotates the front cap with his or her hand, then the threaded ring is driven to rotate, so that the three clamping jaws are moved backward or forward in the angling holes by the screw driving. During the process for clamping the tool handle, because the ball supporting ring is secured to the body, the balls can only spin about itself in the cylindrical through-holes in the ball supporting ring, but cannot revolve around the central axis of the body. In this way, it restrains the tendency that the threaded ring tends to revolve around the central axis of the body in the release direction due to shock, and this may prevent the tool handle from being released to some extents. However, in the above arrangement, the frictional force is only applied to the balls by the upper and lower ball-race surfaces, in other words, the balls contact the ball-race surfaces at only two points, and the hardness of the ball-race surface at one side of the body is limited due to the hardness of the material, so it is limited to increase the clamping force, and it is also limited to improve the shock-resistance, this thus restricts the application of this arrangement in the power churn drill with high power capacity.

Document EP 1 537 931 A1 discloses a chuck according to the preamble of claim 1 having a nut, a thrust plate and a bearing member, wherein the bearing member is sandwiched between the thrust plate and a running surface of the nut. In a clamping process, the entire bearing member with the balls moves radially outward along the tapered surface of the nut. This radial displacement of the bearing member and the balls results in a frictional engagement between a radially external circumference of the bearing member and an inner circumferential longitudinally extending flanged portion of the thrust plate.

Document US 5,145,194 A discloses a tool chuck comprising front and rear sleeves, a nut, a thrust ring and a bearing assembly, wherein the bearing assembly is positioned between the thrust ring and the nut. The bearing assembly includes a bearing retainer having a plurality of balls. Further, the thrust ring has a bearing race surface along which the bearing assembly moves. The thrust ring is formed to have a dish-like deflection characteristic of a belleville spring, wherein when the front and rear sleeves are tightened together, the bearing assembly and the detented thrust ring act as a ratchet mechanism.

Document DE 101 37 281 A1 discloses a drill chuck, which comprises a threaded ring, a thrust ring and a spring ring, wherein the thrust ring is fixed in a groove of the chuck body with a crimp. The spring ring is secured between the body of the chuck and the threaded ring, wherein the spring ring is disposed on the side of the threaded ring that is nearest to the drilling tool. Further, the bearing assembly is sandwiched between the thrust ring and the threaded ring. The spring ring, the thrust ring and the threaded ring exert a damping action when clamping jaws are adjusted into their axially rearward extreme position, and when vibrations coming from the clamping jaws are transmitted to the threaded ring.

### Summary of the Invention

The object of the present invention is to overcome the defects and the disadvantages of the prior art, and to provide a hand-tightening drill chuck which can clamp and lock a tool handle more safely and reliably, and is capable of withstanding a big shock without any releasing or loosing.

This object is achieved with a chuck having the features of claim 1.

The loosing or release of a tool is caused by the relative movement between the threaded ring and clamping jaws, i.e., by the movement of the threaded ring in the release direction, so it is possible to prevent the tool from release and to improve the shock-resistant capability by restraining the rotation of the threaded ring. With the above structure of the present invention, the balls are subjected to frictional forces in three directions after the clamping is completed, so it may prevent the balls from rotating more reliably. As it is difficult for the balls to rotate around the central axis of the drill chuck, it is difficult for the threaded ring to rotate in the release direction. Accordingly, the shock-resistant capacity of the drill chuck is improved.

Preferably, the cylindrical through-holes in the ball supporting ring has a inner diameter greater than the diameter of the balls, usually the diameter of the cylindrical through-holes in the ball supporting ring is greater than the diameter of the balls by 1/15~1/20 of the diameter of the balls.

Preferably, the ball supporting ring has a thickness less than the diameter of the balls, usually, the thickness of the ball supporting ring is less than the diameter of the balls by 1/3 the diameter of the balls.

Preferably, the angle δ between the sloping ball-race surface of the threaded ring and a plane perpendicular to the axis of the threaded ring is in the range from 2°to 10°.

Preferably, the ball supporting ring is secured in the first middle groove of the body by means of interference pressing fit.

In another embodiment, the ball supporting ring is formed with inner protruding keys uniformly distributed on the inner wall thereof, and the first middle groove of the body is formed with key grooves uniformly distributed, wherein the ball supporting ring is secured in the first middle groove by means of the engagement between the inner protruding keys and the key grooves.

Accordingly, the protruding key has a shape corresponding to that of the key groove, and said shape may be selected from a group comprising a triangle, a hemicycle, and a rectangle.

Preferably, the thrust ring and the ball supporting ring are made of quality carbon steel, and after heat treatment have a hardness of HRC45-58.

As another embodiment, the thrust ring and the ball supporting ring may be integrally formed into one single piece which is made by pressing powder metallurgical material in one single step so that to reduce the number of components.

Preferably, 4-24 cylindrical through-holes are arranged on the ball supporting ring, and the cylindrical through-holes are uniformly disposed around a central axis of the ball supporting ring. More cylindrical through-holes are provided, more balls may be contained, so that it may provide a improved shock-resistant capacity.

With the above structure of the present invention, during the procedure of clamping the tool handle, since the ball supporting ring is fixed to the body, the balls can only spin about itself in the cylindrical through-holes, but cannot revolve about the central axis of the body. Especially in the phase from the time of the jaws coming to contact with the tool handle to the time of the jaws completely clamping the tool handle, the balls will move radially along the sloping surface of the threaded ring, and this result in that a comparatively great frictional force is generated between the balls and the side wall of the cylindrical through-holes in the ball supporting ring. Furthermore, as the curvature radius (concave) of the side wall of the cylindrical through-holes in the ball supporting ring is well match the radius (convex) of the balls, so it is difficult for the balls to rotate. Thus it restrains the tendency that the threaded ring tends to rotate in the release direction, and this may prevent the tool handle from being released due to comparatively big shock and impact.

The present invention overcomes the defects and the disadvantages of the drill chunk with a clamping or locking device in the prior art by using the above structure. The drill chunk of the present invention may be operated swiftly, reliably, safely, and conveniently. Furthermore, the drill chunk of the present invention can be applied in in various high power churn drill.

The present invention will be further described with reference to the attached drawings and the embodiments. The preferred embodiments are illustrated for interpreting this invention merely, rather than for limiting the protection scope of the present invention.

### Brief Description of the Drawings

Fig. 1 is an axial sectional schematic view of a shock-resistant drill chunk of hand tightening type according to an embodiment of the present invention.
Fig. 2A~2C are respectively perspective schematic views of the ball supporting rings of this invention.
Fig. 3A is an axial sectional schematic view of a threaded ring according to an embodiment of the present invention.
Fig. 3B is a perspective schematic view of a threaded ring according to an embodiment of the present invention.

### Detailed Description of the Preferred Embodiment

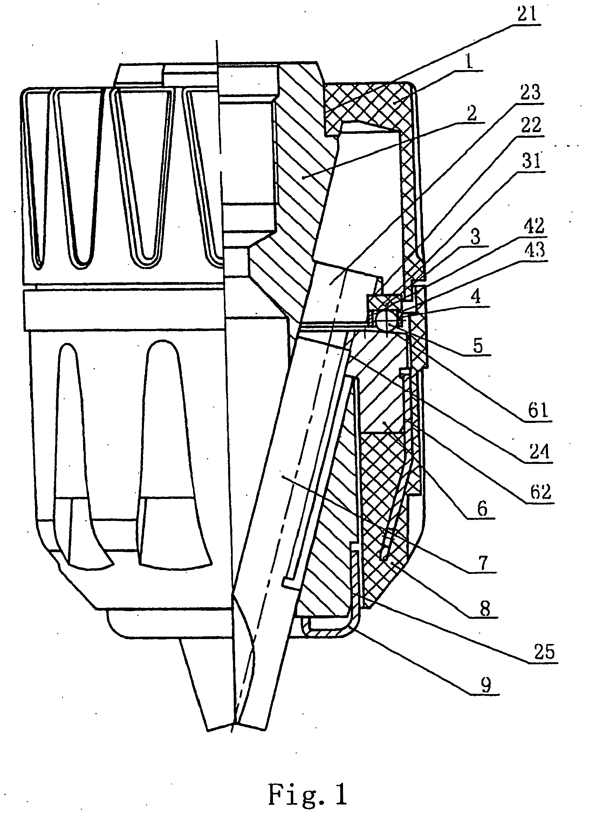

A preferred embodiment of the hand tightening drill chunk according to the present invention is shown in Fig. 1. The hand tightening drill chunk comprise a rear cap 1, a body 2, a thrust ring 3, a ball supporting ring 4, balls 5, a threaded ring 6, clamping jaws 7, a front cap 8, and an end cap 9. The rear cap 1 is tightly fitted on a rear portion 21 of the body 2, and the thrust ring 3 is tightly fitted in a first middle groove 22 of the body 2. Three clamping jaws 7 are respectively arranged in three angling hole 23 which are located on the body 2 and spaced uniformly from each other by 120°. The front cap 8 is tightly fitted around the outer surface 62 of the two halves of the threaded ring 6 so that the two halves form an integral threaded ring. The end cap 9 tightly fitted on a front end 25 of the body 2.

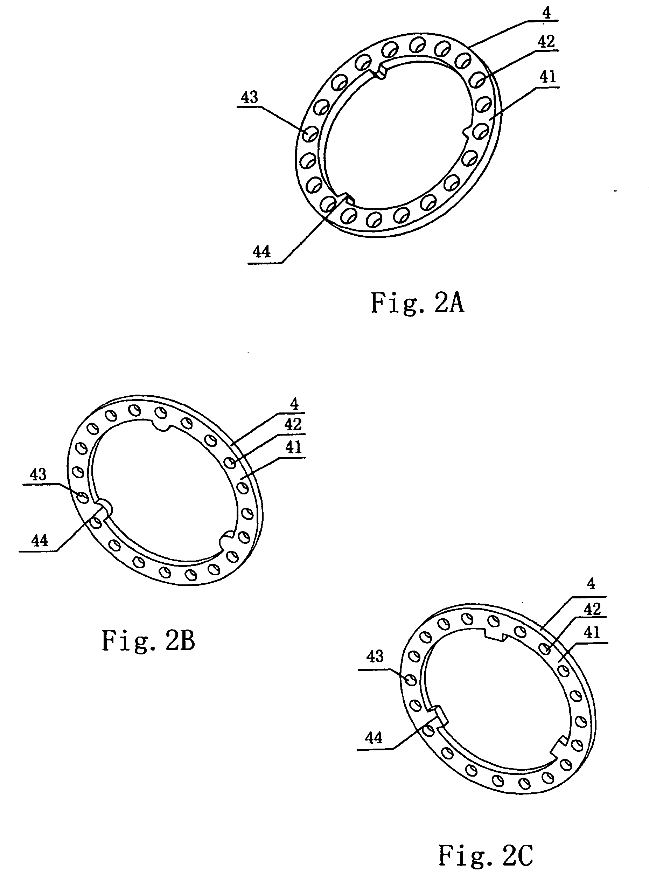

As shown in Fig. 2A-2C, there are 4-24 cylindrical through-holes 42 arranged on the end face 41 of the balls supporting ring 4 of this invention uniformly about the central axis of the supporting ring 4. Preferably, there are 20 cylindrical through-holes 42 as shown in Fig. 2, and there are 20 balls 5 each placed in one of the cylindrical through-holes 42 of the ball supporting ring 4. The ball supporting ring 4 according to the present invention is secured in the first middle groove 22 of the body 2, so that the ball supporting ring 4 cannot revolve around the central axis of the body 2. Because the ball supporting ring 4 is fixed relative to the body 2, the balls 5 located in the ball supporting ring 4 can only spin about itself, and is prevented from revolution about the central axis of body 2. This restrains the threaded ring 6 from rotating towards a release direction to some extent.

The fixedly connection between the ball supporting ring 4 of present invention and the first middle groove 22 may be accomplished by means of interference press fit. In another embodiment, as shown in Fig. 2A-2C, the ball supporting ring 4 is provided with inner protruding keys 44 uniformly arranged on its inner wall. Correspondingly, the first middle groove 22 is provided with key grooves (not shown) uniformly arranged on it, and the ball supporting ring 4 is secured in the first middle groove 22 of the body 2 by means of the engagement between the inner protruding keys 44 and the key groove. The inner protruding keys correspond to the key grooves in the respects of shape, quantity, and location. The shape of the inner protruding keys may be selected from a group comprising a triangle (Fig. 2A), a hemicycle (Fig. 2B), and a rectangle (Fig. 2C).

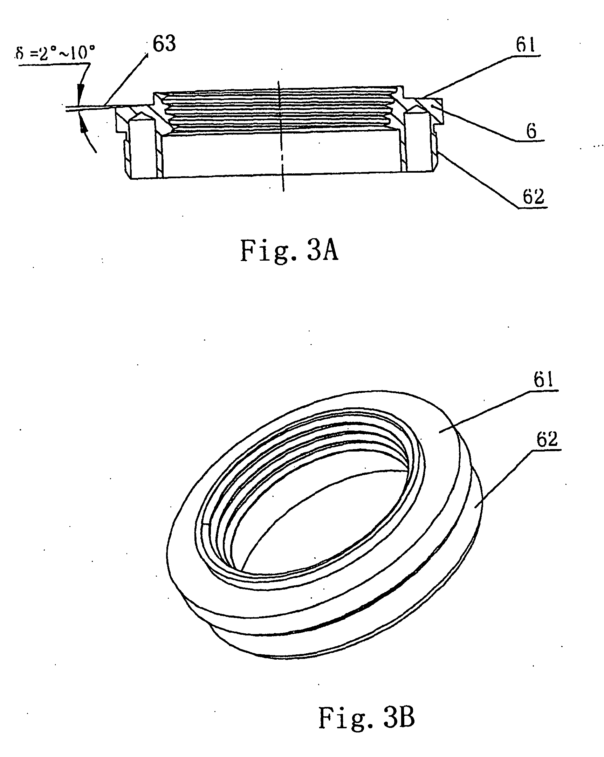

Referring to Fig. 3A and 3B, in this embodiment, the threaded ring 6 with two halves is rotatably disposed in a second middle groove 24 of the body 2. The threaded ring 6 has a sloping ball-race surface 61 on which the balls 5 can roll. Preferably, the angle δ between the sloping ball-race surface 61 of the threaded ring 6 and a plane 63 perpendicular to the axis of the threaded ring 6 is in the range from 2° to 10°. The angle δ may be selected depending on the size of the drill chunk, and the quantity of the balls 5. In this embodiment, the angle δ is preferably taken as δ = 6°.

Because the threaded ring 6 is provided with a sloping ball-race surface 61, in the end phase of the clamping the tool handle, the balls 5 are subjected to the clamping forces from top and bottom, and will move radially outwards along the sloping ball-race surface 61, so that the balls 5 are forced to abut the inner surface of the cylindrical through-holes 42 in the ball supporting ring 4. Thus once the clamping is completed, the balls are subjected to frictional forces in three directions, this further prevents the balls 5 from rotating.

The cylindrical through-holes 42 in the ball supporting ring 4 have an inner diameter greater than the diameter of the balls 5, so that the balls 5 can rotate freely in the cylindrical through-holes 42. Preferably, the inner diameter of the cylindrical through-holes 42 in the ball supporting ring 4 is greater than the diameter of the balls 5 by 1/15 to 1/20 of the diameter of the balls 5. The above scope depends on the size of the drill chunk, provided that the balls 5 can rotate freely in the cylindrical through-holes 42.

The ball supporting ring 4 has a thickness less than the diameter of the ball 5, and the thickness of the ball supporting ring 4 is equal to (1-1/3) time of the diameter of the ball 5. In other words, the thickness of the ball supporting ring 4 is less than the diameter of the ball 5 by 1/3 of the diameter of the balls. The balls 5 thus may protrude out of the ball supporting ring 4, and may rotate freely.

For increasing the clamping force so as to further improve the capacity of shock-resistance of the drill chunk, the thrust ring 3 and the ball supporting ring 4 are made of quality carbon steel or structural alloy steel, of which the hardness after heat treatment reaches HRC45-58.

In another embodiment, in order to reduce the number of the components, the thrust ring 3 and the ball supporting ring 4 are formed integrally into one single piece, which are produced by pressing powder metallurgical material in single step.

The operation of the drill chunk structured according to the present invention will be described with reference to the Fig. 1, Fig. 2A~2C, Fig 3A and 3B.

When a tool bit is to be clamped, one screws the front cap 8 with his or her hand, then the threaded ring 6 is driven to rotate together with the front cap 8. The three clamping jaws are driven to protrude outwardly due to the engagement between the threaded ring and the clamping jaws, thus the tool handle is clamped tightly. During the initial phase of the clamping process, the balls 5 are subjected to a circumferential force applied by the threaded ring 6 due to the fixed connection of the ball supporting ring 4 in the first middle groove 22 of the body 2. However, the balls 5 can only spin about itself in the cylindrical through-holes 42 of the ball supporting ring 4, while cannot revolve around the central axis of the body 2. The spinning of the balls 5 guides the movement of the threaded ring 6.

During the end phase of the clamping process, the clamping jaws come into contact with the tool handle, and this stops the protruding movement of the clamping jaws. Accordingly, when the threaded ring 6 is further rotated, a counterforce will arises between the ring 6 and the clamping jaws 7 to resist the further rotation of the ring 6, and this counterforce results in that the ring 6 tends to be moved in a axially upwards direction. In this way, an anticipated axial force is applied to the balls 5 by the ring 6. Because the ring 6 is provided with the sloping ball-race surface 61, the ball 5 will move radially on the sloping ball-race surface 61 by the axial force when spinning, thus the balls 5 are forced to abut against a side wall 43 of the cylindrical through-holes 42, and a frictional force is produced therebetween. Thus after the tool handle is finally clamped, the balls 5 are subjected to frictional forces in three direction respectively applied by the upper ball-race surface 31 of the thrust ring 3, the sloping ball-race surface (i.e., the lower ball-race surface) 61 of the ring 6, and the side wall 43 of the cylindrical through-holes 42 in the ball supporting ring 4. Since the curvature radius (concave) of the side wall 43 of the cylindrical through-holes 42 in the ball supporting ring 4 is well match the radius (convex) of the balls 5, a relatively bigger contact area can be achieved therebetween, which facilitate to produce a greater frictional force. Under the action of the above frictional forces in the three directions, it is difficult for the balls 5 to rotate, thus the reverse rotation of the ring 6 under a comparatively great shock is suppressed, this thus prevent the tool handle from being releasing.

Furthermore, since up to 4-24 balls 5 are provided, the failure of one or several balls 5 will not lead to the failure of the whole drill chunk. Therefore the present invention provides a drill chunk with a high reliability.

The above specification, examples and data merely provide a complete description of the invention by example. Many embodiments of the invention can be made without departing from the scope of the invention; the invention resides in the claims hereinafter appended.

## Claims

1. A shock-resistant drill chuck of hand tightening type, comprising a rear cap (1), a body (2), a thrust ring (3), a ball supporting ring (4), balls (5), a threaded ring (6), clamping jaws (7), a front cap (8), and an end cap (9), wherein the rear cap (1) is tightly fitted on a rear portion (21) of the body (2), and the thrust ring (3) is tightly fitted in a first middle groove (22) of the body (2), three clamping jaws (7) are arranged in three angling holes (23) which are located on the body (2) and spaced uniformly from each other by 120°, the threaded ring (6) with two halves is rotatably disposed in a second middle groove (24) of the body (2), the front cap (8) is tightly fitted around the outer surface (62) of the two halves of the threaded ring (6) so that the two halves of the threaded ring are fitted together, and the end cap (9) is tightly fitted on a front end (25) of the body (2), wherein the ball supporting ring (4) is located between the threaded ring (6) and the thrust ring (3), and several cylindrical through-holes (42) are arranged at the end face of the ball supporting ring (4), wherein each cylindrical through-hole (42) contains a ball (5), and wherein the threaded ring (6) has a sloping ball-race surface (61) facing the ball (5), wherein during the initial phase of the clamping process of the drill chuck, the rotation of the threaded ring (6) causes that each ball (5) spins about itself in the cylindrical through-holes (42), and during the end phase of the clamping process, the balls (5) move radially along the sloping ball-race surface (61) under an axial clamping force applied by the threaded ring (6) and the thrust ring (3), and abut against an inner wall (43) of the cylindrical through-holes (42), so that a frictional force is produced respectively between the balls (5) and the inner wall of the cylindrical through-holes (42), between the balls (5) and a ball-race surface (31) of the thrust ring (3), and between the balls (5) and the sloping ball-race surface (61) of the threaded ring (6) to prevent the ball from rotating, **characterized in that**, the ball supporting ring (4) is fixedly connected in the first middle groove (22) of the body (2).

2. A shock-resistant drill chuck of hand tightening type according to claim 1, **characterized in that** the cylindrical through-holes (42) in the ball supporting ring (4) have an inner diameter greater than the diameter of the balls (5) by 1/15~1/20 of the diameter of the balls.

3. A shock-resistant drill chuck of hand tightening type according to claim 1, **characterized in that** the ball supporting ring (4) has a thickness less than the diameter of the balls (5) by 1/3 of the diameter of the balls (5).

4. A shock-resistant drill chuck of hand tightening type according to claim 1, **characterized in that** the angle δ between the sloping ball-race surface of the threaded ring (6) and a plane perpendicular to the axis of the threaded ring (6) is in the range from 2° to 10°.

5. A shock-resistant drill chuck of hand tightening type according to claim 1, **characterized in that** the ball supporting ring (4) is tightly fitted in the first middle groove (22) of the body (2) by means of interference press fit.

6. A shock-resistant drill chuck of hand tightening type according to claim 1, **characterized in that** the ball supporting ring (4) is formed with inner protruding keys (44) uniformly distributed on the inner wall thereof, and the first middle groove (22) of the body (2) is formed with key grooves uniformly distributed, wherein the ball supporting ring (4) is secured in the first middle groove (22) by means of the engagement between the inner protruding keys (44) and the key grooves.

7. A shock-resistant drill chuck of hand tightening type according to claim 6, **characterized in that** the inner protruding key has a shape corresponding to that of the key groove, and said shape is selected from a group comprising a triangle, a hemicycle, and a rectangle.

8. A shock-resistant drill chuck of hand tightening type according to any one of the claims 1 to 7, **characterized in that** the thrust ring (3) and the ball supporting ring (4) are made of quality carbon steel, of which the hardness after heat treatment reaches HRC45-58.

9. A shock-resistant drill chuck of hand tightening type according to claim 1, **characterized in that** the thrust ring (3) and the ball supporting ring (4) are integrally formed into one single piece which is made by pressing powder metallurgical material at one step.

10. A shock-resistant drill chuck of hand tightening type according to claim 1, **characterized in that** the ball supporting ring (4) is formed with 4-24 cylindrical through-holes (42), which are uniformly distributed about a central axis of the ball supporting ring (4).

## Patentansprüche

1. Schockbeständiges von Hand spannbares Bohrfutter, das eine hintere Kappe (1), einen Körper (2), einen Druckring (3), einen Kugellagerring (4), Kugeln (5), einen Gewindering (6), Spannbacken (7), eine vordere Kappe (8) und eine Endkappe (9) aufweist, wobei die hintere Kappe (1) mit Passsitz auf einem hinteren Abschnitt (21) des Körpers (2) sitzt und der Druckring (3) mit Passsitz in einer ersten mittleren Nut (22) des Körpers (2) sitzt, drei Spannbacken (7) in drei Winkelbohrungen (23) am Körper (2) angeordnet und gleichmäßig um 120° voneinander beabstandet sind, der Gewindering (6) mit zwei Hälften drehbar in einer zweiten mittleren Nut (24) des Körpers (2) angeordnet ist, die vordere Kappe (8) mit Passsitz auf der Außenoberfläche (62) der zwei Hälften des Gewinderings (8) sitzt, so dass die zwei Hälften des Gewinderings zusammengepasst werden, und die Endkappe (9) mit Passsitz auf einem vorderen Ende (25) des Körpers (2) sitzt, wobei der Kugellagerring (4) zwischen dem Gewindering (6) und dem Druckring (7) angeordnet ist und mehrere zylindrische Durchgangsbohrungen (42) an der Stirnfläche des Kugellagerrings (4) angeordnet sind, wobei jede zylindrische Durchgangsbohrung (42) eine Kugel (5) enthält und wobei der Gewindering (6) eine zur Kugel (5) weisende geneigte Laufringoberfläche (61) hat, wobei während der Anfangsphase des Spannprozesses des Bohrfutters die Drehung des Gewinderings (6) bewirkt, dass sich jede Kugel (5) um sich selbst in den zylindrischen Durchgangsbohrungen (42) dreht, und während der Endphase des Spannprozesses die Kugeln (5) sich radial entlang der geneigten Laufringoberfläche (61) unter einer vom Gewindering (6) und vom Druckring (3) aufgebrachten axialen Spannkraft bewegen und gegen eine Innenwand (43) der zylindrischen Durchgangsbohrungen (42) anschlagen, so dass eine Reibungskraft jeweils zwischen den Kugeln (5) und der Innenwand der zylindrischen Durchgangsbohrungen (42), zwischen den Kugeln (5) und einer Laufringoberfläche (31) des Druckrings (3) und zwischen den Kugeln (5) und der geneigten Laufringoberfläche (61) des Gewinderings (6) erzeugt wird, um eine Rotation der Kugel zu verhindern,
**dadurch gekennzeichnet, dass** der Kugellagerring (4) fest in der ersten mittleren Nut (22) des Körpers (2) angeordnet ist.

2. Schockbeständiges von Hand spannbares Bohrfutter nach Anspruch 1, **dadurch gekennzeichnet, dass** die zylindrischen Durchgangsbohrungen (42) im Kugellagerring (4) einen Innendurchmesser haben, der um 1/15 bis ca. 1/20 des Durchmessers der Kugeln größer ist als der Durchmesser der Kugeln (5).

3. Schockbeständiges von Hand spannbares Bohrfutter nach Anspruch 1, **dadurch gekennzeichnet, dass** der Kugellagerring (4) eine um 1/3 des Durchmessers der Kugeln (5) kleinere Dicke hat als der Durchmesser der Kugeln (5).

4. Schockbeständiges von Hand spannbares Bohrfutter nach Anspruch 1, **dadurch gekennzeichnet, dass** der Winkel δ zwischen der geneigten Laufringoberfläche des Gewinderings (6) und einer zur Achse des Gewinderings (6) senkrechten Ebene im Bereich von 2° bis 10° liegt.

5. Schockbeständiges von Hand spannbares Bohrfutter nach Anspruch 1, **dadurch gekennzeichnet, dass** der Kugellagerring (4) mittels eines Presssitzes fest in der ersten mittleren Nut (22) des Körpers (2) sitzt.

6. Schockbeständiges von Hand spannbares Bohrfutter nach Anspruch 1, **dadurch gekennzeichnet, dass** der Kugellagerring (4) mit nach innen ragenden Keilen (44) ausgeführt ist, die gleichmäßig an seiner Innenwand verteilt sind, und die erste mittlere Nut (22) des Körpers (2) mit gleichmäßig verteilten Keilnuten ausgeführt ist, wobei der Kugellagerring (4) in der ersten mittleren Nut (22) durch den Eingriff zwischen den nach innen ragenden Keilen (44) und den Keilnuten gesichert ist.

7. Schockbeständiges von Hand spannbares Bohrfutter nach Anspruch 6, **dadurch gekennzeichnet, dass** der nach innen ragende Keil eine der Keilnut entsprechende Form hat, wobei die Form aus einer Gruppe gewählt wird, die aus einem Dreieck, einem Halbkreis und einem Rechteck besteht.

8. Schockbeständiges von Hand spannbares Bohrfutter nach einem der Ansprüche 1 bis 7, **dadurch gekennzeichnet, dass** der Druckring (3) und der Kugellagerring (4) aus qualitativ hochwertigem unlegiertem Stahl bestehen, dessen Härte nach der Wärmebehandlung HRC 45 bis 58 erreicht.

9. Schockbeständiges von Hand spannbares Bohrfutter nach Anspruch 1, **dadurch gekennzeichnet, dass** der Druckring (3) und der Kugellagerring (4) als ein einzelnes integrales Teil ausgebildet sind, das in einem Schritt durch metallurgisches Pressen von Pulvermaterial hergestellt wird.

10. Schockbeständiges von Hand spannbares Bohrfutter nach Anspruch 1, **dadurch gekennzeichnet, dass** der Kugellagerring (4) mit 2 bis 24 zylindrischen Durchgangsbohrungen (42) ausgeführt ist, die gleichmäßig um die Mittelachse des Kugellagerrings (4) verteilt sind.

## Revendications

1. Mandrin porte-foret résistant aux chocs du type à serrage à la main, comprenant un capuchon arrière (1), un corps (2), une rondelle de butée (3), une bague de support de billes (4), des billes (5), une bague filetée (6), des mâchoires de serrage (7), un capuchon avant (8) et un capuchon d'extrémité (9), dans lequel le capuchon arrière (1) est étroitement ajusté sur une partie arrière (21) du corps (2) et la rondelle de butée (3) est étroitement ajustée dans une première rainure médiane (22) du corps (2), trois mâchoires de serrage (7) sont agencées dans trois trous en angle (23) qui sont situés sur le corps (2) et espacés uniformément les uns des autres de 120°, la bague filetée (6) avec deux moitiés est disposée de manière rotative dans une deuxième rainure médiane (24) du corps (2), le capuchon avant (8) est étroitement ajusté autour de la surface extérieure (62) des deux moitiés de la bague filetée (6) de telle sorte que les deux moitiés de la bague filetée sont ajustées ensemble, et le capuchon d'extrémité (9) est étroitement ajusté sur une extrémité avant (25) du corps (2), dans lequel la bague de support de billes (4) est située entre la bague filetée (6) et la rondelle de butée (3), et plusieurs trous traversants cylindriques (42) sont agencés au niveau de la face d'extrémité de la bague de support de billes (4), dans lequel chaque trou traversant cylindrique (42) contient une bille (5), et dans lequel la bague filetée (6) a une surface de roulement en pente (61) faisant face à la bille (5), dans lequel, pendant la phase initiale du processus de serrage du mandrin porte-foret, la rotation de la bague filetée (6) fait que chaque bille (5) tourne sur elle-même dans les trous traversants cylindriques (42), et pendant la phase terminale du processus de serrage, les billes (5) se déplacent radialement le long de la surface de roulement en pente (61) sous une force de serrage axiale appliquée par la bague filetée (6) et la rondelle de butée (3), et viennent buter contre une paroi intérieure (43) des trous traversants cylindriques (42), de sorte qu'une force de frottement est produite respectivement entre les billes (5) et la paroi intérieure des trous traversants cylindriques (42), entre les billes (5) et une surface de roulement (31) de la rondelle de butée (3), et entre les billes (5) et la surface de roulement en pente (61) de la bague filetée (6) pour empêcher que la bille ne tourne, **caractérisé en ce que** la bague de support de billes (4) est connectée de façon fixe dans la première rainure médiane (22) du corps (2).

2. Mandrin porte-foret résistant aux chocs du type à serrage à la main selon la revendication 1, **caractérisé en ce que** les trous traversants cylindriques (42) dans la
bague de support de billes (4) ont un diamètre intérieur plus grand que le diamètre des billes (5) de 1/15^{ème} ~ 1/20^{ème} du diamètre des billes.

3. Mandrin porte-foret résistant aux chocs du type à serrage à la main selon la revendication 1, **caractérisé en ce que** la bague de support de billes (4) a une épaisseur inférieure au diamètre des billes (5) de 1/3 du diamètre des billes (5).

4. Mandrin porte-foret résistant aux chocs du type à serrage à la main selon la revendication 1, **caractérisé en ce que** l'angle δ entre la surface de roulement en pente de la bague filetée (6) et un plan perpendiculaire à l'axe de la bague filetée (6) est dans la plage de 2° à 10°.

5. Mandrin porte-foret résistant aux chocs du type à serrage à la main selon la revendication 1, **caractérisé en ce que** la bague de support de billes (4) est étroitement ajustée dans la première rainure médiane (22) du corps (2) au moyen d'un ajustement par pression par interférence.

6. Mandrin porte-foret résistant aux chocs du type à serrage à la main selon la revendication 1, **caractérisé en ce que** la bague de support de billes (4) est formée avec des clavettes intérieures en saillie (44) uniformément réparties sur la paroi intérieure de celle-ci, et la première rainure médiane (22) du corps (2) est formée avec des rainures de clavettes uniformément réparties, dans lequel la bague de support de billes (4) est fixée dans la première rainure médiane (22) au moyen de l'engagement entre les clavettes intérieures en saillie (44) et les rainures de clavettes.

7. Mandrin porte-foret résistant aux chocs du type à serrage à la main selon la revendication 6, **caractérisé en ce que** la clavette intérieure en saillie a une forme correspondant à celle de la rainure de clavette, et ladite forme est choisie parmi un groupe comprenant un triangle, un demi-cercle et un rectangle.

8. Mandrin porte-foret résistant aux chocs du type à serrage à la main selon l'une quelconque des revendications 1 à 7, **caractérisé en ce que** la rondelle de butée (3) et la bague de support de billes (4) sont constituées d'un acier au carbone de qualité, dont la dureté après traitement à la chaleur atteint HRC45-58.

9. Mandrin porte-foret résistant aux chocs du type à serrage à la main selon la revendication 1, **caractérisé en ce que** la rondelle de butée (3) et la bague de support de billes (4) sont formées de façon intégrale en une seule pièce qui est fabriquée par pressage d'un matériau métallurgique en poudre en une étape.

10. Mandrin porte-foret résistant aux chocs du type à serrage à la main selon la revendication 1, **caractérisé en ce que** la bague de support de billes (4) est formée avec 4 à 24 trous traversants cylindriques (42) qui sont uniformément répartis autour d'un axe central de la bague de support de billes (4).
